# FASCICULE DE BREVET EUROPEEN

(11) **EP 3 019 398 B1**
(45) Date de publication et mention de la délivrance du brevet: **28.03.2018**
(21) Numéro de dépôt: 14742277.8
(22) Date de dépôt: 25.06.2014
(51) Int. Cl.: B64C 11/26, B29D 99/00

(54) **PALE D'HÉLICE COMPOSITE POUR AÉRONEF**
KOMPOSIT-ROTORBLATT FÜR LUFTFAHRZEUG
COMPOSITE ROTOR BLADE FOR AIRCRAFT

(30) Priorité: 08.07.2013 US 201361843505 P
(43) Date de publication de la demande: 18.05.2016
(73) Titulaire: Snecma, 75015 Paris (FR)
(72) Inventeur: LAURENCEAU, Adrien, F-77550 Moissy-Cramayel Cedex (FR); FABRE, Adrien, Jacques, Philippe, F-77550 Moissy-Cramayel Cedex (FR); GIMAT, Matthieu, Portsmouth, New Hampshire 03801 (US)
(74) Mandataire: Desormiere, Pierre-Louis
(86) Numéro de dépôt international: PCT/FR2014/051595
(87) Numéro de publication internationale: WO 2015/004362

(56) Documents cités:
- EP-A1- 2 540 620
- WO-A1-2012/001279
- FR-A1- 2 985 940
- US-A- 4 971 641
- US-A- 5 129 787
- US-A1- 2013 017 093

## Description

### Arrière-plan de l'invention

La présente invention se rapporte au domaine des pales d'hélice pour aéronefs telles que celles présentes sur les turbopropulseurs.

Les pales d'hélice pour turbopropulseurs sont généralement réalisées en matériau métallique. Si les pales d'hélice en matériau métallique ont une bonne résistance mécanique, elles présentent toutefois l'inconvénient d'avoir une masse relativement importante.

Afin d'obtenir des pales plus légères, il est connu de réaliser des pales d'hélice en matériau composite, c'est-à-dire en réalisant des pièces de structure à renfort fibreux et matrice résine.

Les documents US 2013/0017093 et WO 2012/001279 décrivent la réalisation d'une pale d'hélice à partir d'une structure fibreuse à profil aérodynamique à l'intérieur de laquelle est introduite une partie d'un longeron permettant la mise en forme de la partie aérodynamique de la pale de manière à former une préforme d'hélice qui est ensuite densifiée par une matrice. La structure fibreuse, qui est réalisée en une seule pièce par tissage tridimensionnel, comporte une zone de déliaison permettant de former un logement à l'intérieur de la structure fibreuse dans lequel est insérée une portion de conformation du longeron.

La pale d'hélice ainsi obtenue présente à la fois une masse globale allégée et une résistance mécanique importante par la présence en peau d'une structure en matériau composite (renfort fibreux densifié par une matrice).

Afin de conférer une bonne résistance mécanique à la partie la plus exposée de la pale, à savoir le bord d'attaque, la structure fibreuse ne comporte pas d'ouverture ou de zone de déliaison dans les parties de la structure fibreuse destinées à former le bord d'attaque de la pale. La zone de déliaison ménagée à l'intérieur de la structure fibreuse débouche à la fois sur le bord radialement intérieur et le bord arrière de la structure de manière à former une ouverture permettant l'introduction de la portion de conformation du longeron à l'intérieur de la structure fibreuse.

Cependant, dans certains cas, comme par exemple lorsque la pale est soumise à des charges mécaniques importantes, des impacts ou des chocs, le maintien de la portion de conformation dans sa position de référence à l'intérieur de la structure fibreuse densifiée peut être difficile, en particulier au niveau du bord arrière de la structure fibreuse qui présente une résistance moindre en raison de la présence d'une déliaison à cet endroit de la structure fibreuse.

### Objet et résumé de l'invention

Il est donc souhaitable de pouvoir proposer une pale d'hélice d'aéronef du type décrit ci-avant mais qui présente une résistance mécanique accrue en particulier au niveau du maintien en position de la portion de conformation du longeron à l'intérieur de la structure fibreuse de pale.

A cet effet, selon l'invention, il est proposé une pale d'hélice d'aéronef comprenant une structure à profil aérodynamique constituée d'au moins un renfort fibreux obtenu par tissage tridimensionnel de fils et densifié par une matrice et un longeron comprenant une portion renflée s'étendant à l'extérieur du renfort fibreux et formant le pied de la pale ainsi qu'une portion de conformation présente dans un logement ménagé à l'intérieur du renfort fibreux, le renfort fibreux comportant une zone de déliaison formant ledit logement à l'intérieur du renfort fibreux, la zone de déliaison débouchant au niveau de la partie radialement intérieure et du bord arrière du renfort fibreux de manière à former une ouverture pour l'introduction de la portion de conformation du longeron dans le logement du renfort fibreux, caractérisée en ce que l'ouverture présente sur le bord arrière du renfort fibreux s'étend sur une hauteur inférieure à la hauteur du logement de manière à ménager sur ledit bord arrière une portion de retenue au moins partiellement en contact avec la portion de conformation du longeron.

En ménageant ainsi une portion de retenue au niveau du bord arrière, on assure un bon maintien en position de la portion de conformation du longeron dans le renfort fibreux, et ce malgré la présence d'une zone de déliaison dans le renfort. En effet, même en cas de sollicitations mécaniques (impacts, chocs) au niveau de la structure à profil aérodynamique de la pale, il n'y a pas de risque de déplacement de la portion de conformation à l'intérieur du renfort car celle-ci est retenue du côté du bord d'attaque et du côté du bord de fuite de la pale par des parties continûment tissées du renfort.

Selon un premier aspect de la pale de l'invention, l'ouverture présente sur le bord arrière du renfort fibreux s'étend sur une hauteur comprise entre 20% et 50% de la hauteur du logement.

Selon un deuxième aspect de la pale de l'invention, la portion de retenue présente une largeur décroissante entre le sommet du logement et la jonction entre ladite portion de retenue et l'ouverture présente sur le bord arrière du renfort fibreux. Dans ce cas, la zone de contact entre la portion de conformation et la portion de retenue s'étend de préférence sur une hauteur comprise entre 20% et 50% de la hauteur du logement.

Selon un troisième aspect de la pale de l'invention, le longeron comprend une pièce de structure en matériau composite et une pièce en matériau rigide alvéolé collée sur une partie du pourtour de la pièce de structure.

L'invention a également pour objet un moteur aéronautique comprenant une pluralité de pales selon l'invention.

L'invention concerne encore un aéronef comprenant au moins un moteur selon l'invention.

La présente invention a enfin pour objet un procédé de fabrication d'une pale d'hélice d'aéronef comprenant au moins:
- la réalisation d'une ébauche fibreuse en une seule pièce par tissage tridimensionnel de fils, ladite ébauche comportant une zone de déliaison formant un logement à l'intérieur de l'ébauche, ladite zone de déliaison débouchant au niveau de la partie radialement intérieure et du bord arrière de l'ébauche fibreuse de manière à former une ouverture,
- la réalisation d'un longeron comprenant une portion renflée s'étendant à l'extérieur de l'ébauche fibreuse et formant le pied de la pale et une portion de conformation présente dans un logement ménagé à l'intérieur du renfort fibreux,
- la mise en forme de l'ébauche fibreuse par introduction de la portion de conformation du longeron dans le logement de l'ébauche fibreuse pour obtenir une préforme de structure à profil aérodynamique,
- la densification de la préforme par une matrice pour obtenir une structure à profil aérodynamique ayant un renfort fibreux constitué par ladite préforme et densifié par la matrice,
caractérisé en ce que l'ouverture présente sur le bord arrière de l'ébauche fibreuse s'étend sur une hauteur inférieure à la hauteur du logement de manière à ménager sur ledit bord arrière une portion de retenue au moins partiellement en contact avec la portion de conformation du longeron.

Selon un premier aspect du procédé de l'invention, l'ouverture présente sur le bord arrière de l'ébauche fibreuse s'étend sur une hauteur comprise entre 20% et 50% de la hauteur du logement.

Selon un deuxième aspect du procédé de l'invention, la portion de retenue présente une largeur décroissante entre le sommet du logement et la jonction entre ladite portion de retenue et l'ouverture présente sur le bord arrière de l'ébauche fibreuse. Dans ce cas, la zone de contact entre la portion de conformation et la portion de retenue s'étend sur une hauteur comprise de préférence entre 20% et 50% de la hauteur du logement.

Selon un troisième aspect du procédé de l'invention, la réalisation du longeron comprend la fabrication d'une pièce de structure en matériau composite et le collage d'une pièce en matériau rigide alvéolé sur une partie du pourtour de ladite pièce de structure.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue en perspective d'une pale d'hélice d'aéronef conformément à un mode de réalisation de l'invention,
- la figure 2 est une vue en perspective d'un turbopropulseur équipé d'une pluralité de pales d'hélice selon l'invention,
- la figure 3 est une vue en perspective d'un longeron utilisé pour la fabrication de la pale d'hélice de la figure 1,
- la figure 4 est une vue schématique illustrant le tissage 3D d'une ébauche fibreuse pour la fabrication de l'hélice de la figure 1,
- la figure 5 est une vue en coupe partielle à échelle agrandie d'un ensemble de couches de fils montrant la formation d'une zone de déliaison dans l'ébauche de la figure 4,
- la figure 6 est une vue en coupe partielle à échelle agrandie d'un ensemble de couches de fils montrant une variante de réalisation de la zone de déliaison dans l'ébauche de la figure 4,
- la figure 7 est une vue en perspective montrant l'insertion de la portion de conformation du longeron de la figure 3 dans l'ébauche fibreuse de la figure 4,
- la figure 8 est une vue en perspective montrant la préforme de pale avant densification destinée à réaliser la pale d'hélice de la figure 1,
- la figure 9 est une vue en perspective montrant une variante de réalisation d'une ébauche fibreuse conformément à un autre mode de réalisation de l'invention.

### Description détaillée de modes de réalisation

L'invention s'applique d'une manière générale à différents types d'hélices utilisées dans des moteurs d'aéronefs tels que des avions ou des hélicoptères. L'invention trouve une application avantageuse mais non exclusive dans des hélices de grandes dimensions qui, en raison de leur taille, présentent une masse importante ayant un impact significatif sur la masse globale du moteur de l'aéronef.

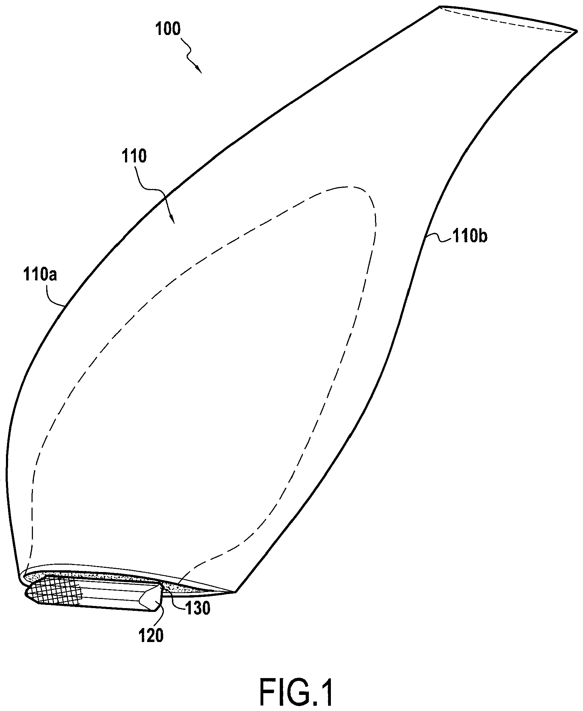

La figure 1 représente une pale d'hélice 100 destinée à être montée sur un turbopropulseur d'avion qui comprend, une structure à profil aérodynamique 110 destinée à former la parie aérodynamique de la pale, un pied 120 formé par une partie de plus forte épaisseur, par exemple à section en forme de bulbe, prolongé par une échasse 130. La structure à profil aérodynamique 110 présente en section transversale un profil incurvé d'épaisseur variable entre son bord d'attaque 110a et son bord de fuite 110b.

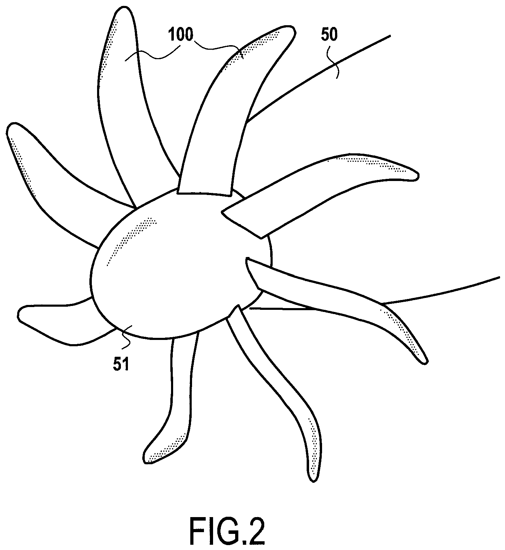

Comme illustré sur la figure 2, l'hélice 100 est montée sur un rotor 51 de turbopropulseur 50 par engagement du pied 120 dans un logement aménagé à la périphérie du rotor 51 (non représenté sur la figure 2).

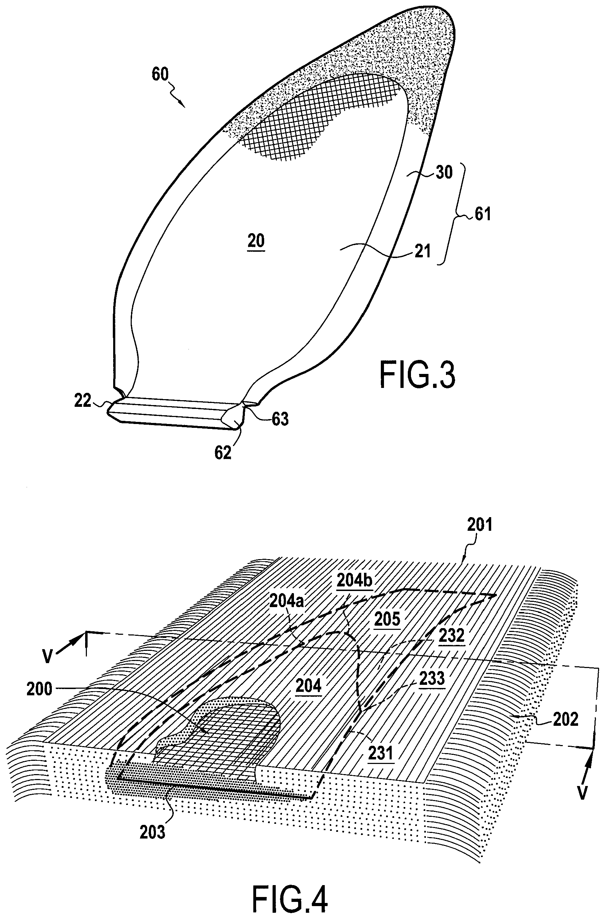

Le procédé de fabrication d'une hélice selon l'invention comprend la réalisation d'un longeron 60 illustré sur la figure 3 et qui est destiné à être introduit en partie dans une ébauche fibreuse pour former la préforme de la structure à profil aérodynamique de la pale d'hélice. Le longeron 60 est constitué ici d'une pièce de structure 20 et d'une pièce en matériau rigide alvéolé 30 collée sur une partie du pourtour de la pièce de structure.

Le longeron 60 comporte une portion de conformation 61 correspondant ici à une première partie 21 de la pièce de structure et à la pièce en matériau rigide alvéolé 30 collée sur cette partie 21. La portion de conformation 61 est destinée à être introduite dans un logement de l'ébauche fibreuse afin de former la préforme de la structure à profil aérodynamique comme décrit en détail ci-après. Le longeron 60 comporte également une portion renflée 62 correspondant à une deuxième partie 22 de la pièce de structure 20, la portion renflée 62 étant destinée à former le pied 120 de la pale d'hélice 10 (figure 1), la partie 63 située entre les portions 61 et 62 étant destinée à former l'échasse 130 de l'hélice (figure 1).

La pièce de structure 20 est réalisée en matériau composite, c'est-à-dire à partir d'une préforme fibreuse densifiée par une matrice. A cet effet, on réalise une préforme fibreuse obtenue, par exemple, par tissage tridimensionnel ou multicouche à armure interlock de fils de fibres de carbone. Lors du tissage de l'ébauche fibreuse de la pièce de structure 20, la deuxième partie 22 peut être obtenue en utilisant des fils de trame de plus gros titre et des couches supplémentaires de fils de trame ou en introduisant un insert.

Une fois réalisée, la préforme de la pièce de structure est imprégnée d'une résine, telle qu'une résine BMI (bismaléimide), qui est ensuite polymérisée. Ces deux opérations peuvent être réalisées suivant la technique de moulage par transfert RTM décrite ci-après. Après la polymérisation de la résine, le longeron est usiné à sa cote finale.

La pièce 30 qui est destinée à coopérer avec la première partie 21 de la pièce de structure 20 est en matériau rigide alvéolé, c'est-à-dire un matériau présentant une faible densité afin de ne pas alourdir la pale finale. La pièce 30 peut être réalisée par moulage ou par usinage dans un bloc de matériau, par exemple une plaque de mousse commercialisée sous la référence ROHACELL® 110 XTHT.

La partie 21 de la pièce de structure 20 et la pièce 30 ont des formes complémentaires qui permettent de définir, une fois assemblées entre elles, une portion de conformation 61 ayant une forme correspondant à celle de la structure à profil aérodynamique de la pale de l'hélice à réaliser. La pièce de structure 20 et la pièce en matériau rigide alvéolé 30 sont collées avant leur introduction dans l'ébauche fibreuse de pale.

Selon une variante de réalisation, le longeron peut être entièrement constitué par une pièce de structure en matériau composite (i.e. sans pièce en matériau rigide alvéolé).

La figure 4 montre très schématiquement une ébauche fibreuse 200 destinée à former la préforme fibreuse de la structure à profil aérodynamique de la pale de l'hélice à réaliser.

L'ébauche fibreuse 200 est obtenue, comme illustrée schématiquement sur la figure 4, par tissage tridimensionnel (3D) réalisé de façon connue au moyen d'un métier à tisser de type jacquard sur lequel on a disposé un faisceau de fils de chaînes 201 ou torons en une pluralité de couches de plusieurs centaines de fils chacune, les fils de chaînes étant liés par des fils de trame 202.

Dans l'exemple illustré, le tissage 3D est un tissage à armure "interlock". Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure.

D'autres types de tissage tridimensionnel connus pourront être utilisés, comme notamment ceux décrits dans le document WO 2006/136755. Ce document décrit notamment la réalisation par tissage en une seule pièce de structures fibreuses de renfort pour des pièces telles que des aubes ayant un premier type d'armure à coeur et un deuxième type d'armure en peau qui permettent de conférer à la fois les propriétés mécaniques et aérodynamiques attendues pour ce type de pièce.

L'ébauche fibreuse selon l'invention peut être tissée notamment à partir de fils de fibres de carbone ou de céramique tel que du carbure de silicium.

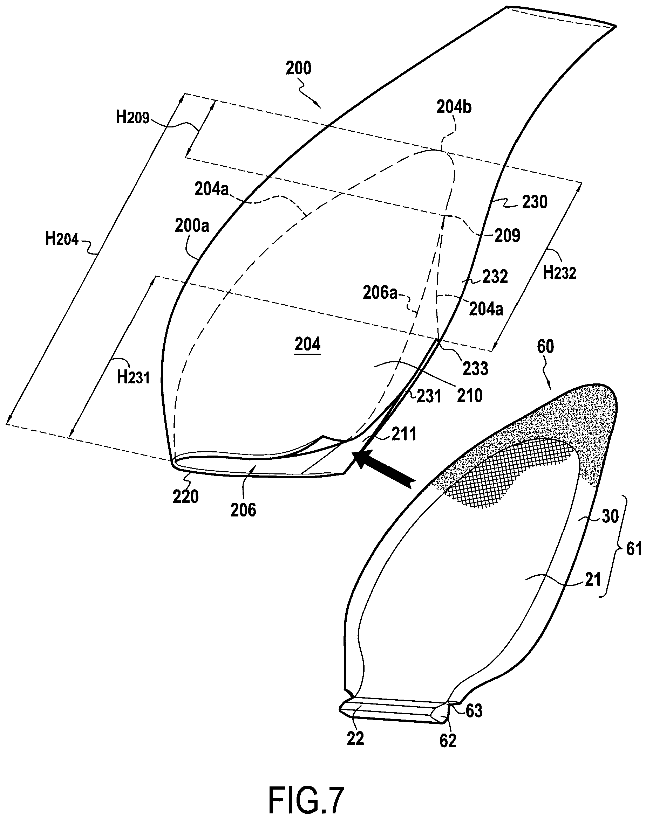

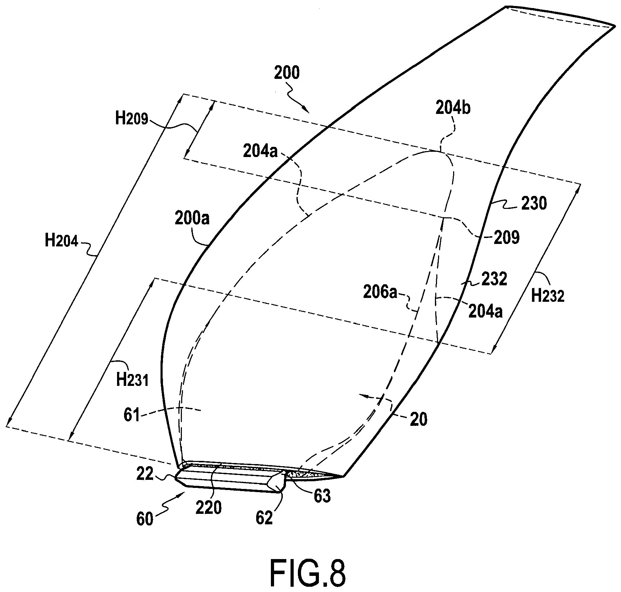

Au fur et à mesure du tissage de l'ébauche fibreuse dont l'épaisseur et la largeur varient, un certain nombre de fils de chaîne ne sont pas tissés, ce qui permet de définir le contour et l'épaisseur voulue, continûment variable, de l'ébauche 200. Un exemple de tissage 3D évolutif permettant notamment de faire varier l'épaisseur de l'ébauche entre un premier bord destiné à former le bord d'attaque et un deuxième bord d'une épaisseur moindre et destiné à former le bord de fuite est décrit dans le document EP 1 526 285. Lors du tissage, une déliaison 203 (figure 4) est réalisée à l'intérieur de l'ébauche fibreuse entre deux couches successives de fils de chaîne et sur une zone de déliaison 204 délimitée par un contour 204a séparant ladite zone de déliaison 204 d'une zone de liaison 205 dans l'ébauche fibreuse. La zone de déliaison 204 permet de ménager un logement 206 (figure 7) aux dimensions de la portion de conformation 61 du longeron 60 à l'intérieur de l'ébauche fibreuse 200 en vue de la formation de la préforme de pale (figure 8).

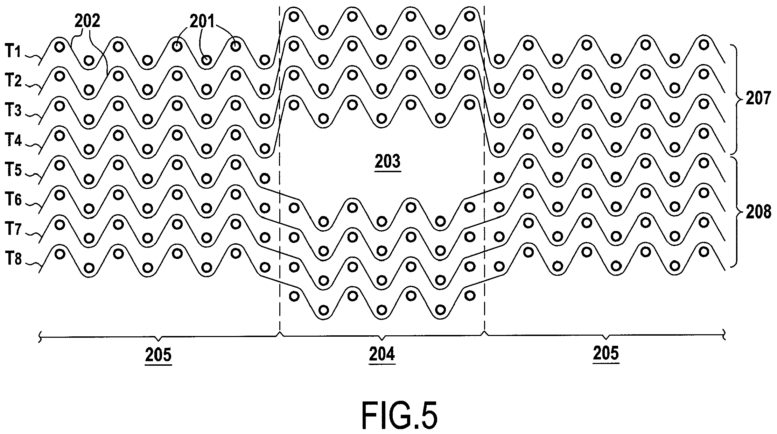

Un mode de tissage 3D à armure interlock de l'ébauche 200 est montré schématiquement par la figure 5. La figure 5 est une vue partielle agrandie d'un plan en coupe chaîne dans une partie de l'ébauche 200 comportant la zone de déliaison 204 (coupe V-V sur la figure 4). Dans cet exemple, l'ébauche 200 comprend 8 couches de fils de chaîne 201 s'étendant dans la direction X. Sur la figure 5, les 8 couches de fils de chaîne sont liées par des fils de trame T₁ à T₈ dans les zones de liaison 205 de l'ébauche fibreuse 200. Dans la zone de déliaison 204, les 4 couches de fils de chaîne 201 formant l'ensemble de couches de fils 207 sont liées entre elles par 4 fils de trame T₁ à T₄, de même que les 4 couches de fils de chaîne formant l'ensemble de couches de fils 208 sont liés par 4 fils de trame T₅ et T₈. En d'autres termes, le fait que les fils de trame T₁ à T₄ ne s'étendent pas dans les couches de fils 208 et que les fils de trame T₅ à T₈ ne s'étendent pas dans les couches de fils 207 assure la déliaison 203 qui sépare l'un de l'autre les ensembles de couches de fils de chaîne 207 et 208.

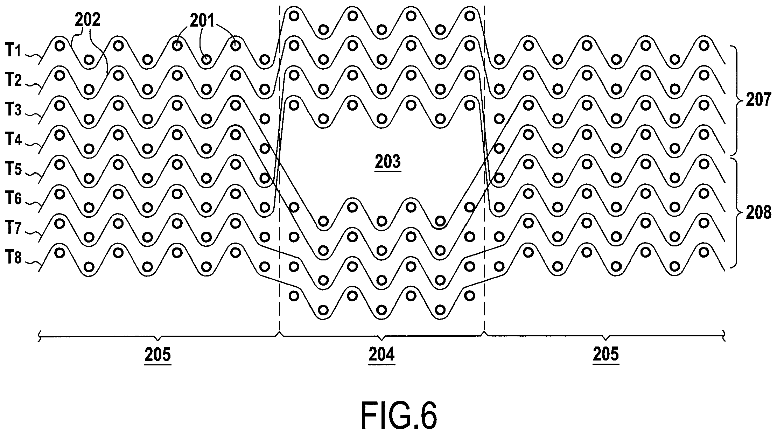

Dans la zone de déliaison 204 de l'exemple de tissage présenté sur la figure 5, les fils de trame T₁ à T₄, d'une part, et les fils de trame T₅ à T₈, d'autre part, sont respectivement disposés de chaque côté de la déliaison 203, les fils de trame T₁ à T₄ liant les quatre premières couches de fils de chaîne formant l'ensemble de couches de fils 207 et les fils de trame T₅ à T₈ liant les quatre dernières couches de fils de chaîne formant l'ensemble de couches de fils 208. Selon une variante de réalisation illustrée en figure 6, un ou plusieurs fils de trame liant des couches de fils de chaîne formant l'ensemble de couches de fils 207 dans les zones de liaison 205 sont utilisés pour lier des couches de fils de chaîne formant l'ensemble de couches de fils 208 dans les zones de liaison 205 et inversement. Plus précisément, comme illustrés sur la figure 6, les fils de trame T₃ et T₄, liant des couches de fils de chaîne de l'ensemble de couches de fils 207 dans la première zone de liaison 205 sont déviés à leur entrée dans la zone de déliaison 204 pour lier des couches de fils de chaîne de l'ensemble de couches de fils 208. De même, les fils de trame T₅ et T₆, liant des couches de fils de chaîne de l'ensemble de couches de fils 208 dans la première zone de liaison 205 sont déviés à leur entrée dans la zone de déliaison 204 pour lier des couches de fils de chaîne de l'ensemble de couches de fils 207. Après la zone de déliaison 204, les fils de trame T₃ et T₄ sont de nouveau déviés à leur entrée dans la deuxième zone de liaison 205 pour lier des couches de fils de chaîne de l'ensemble de couches de fils 208 tandis que les fils de trame T₅ et T₆ sont de nouveau déviés à leur entrée dans la deuxième zone de liaison 205 pour lier des couches de fils de chaîne de l'ensemble de couches de fils 207. Le croisement des fils de trame T₃ et T₄ et des fils de trame T₅ et T₆ au début et à la fin de la zone de déliaison 204 permet d'améliorer la tenue de l'ébauche fibreuse dans la zone de déliaison.

A la fin du tissage (figure 4), on sectionne, par exemple au jet d'eau sous pression, les fils de chaîne et de trame à la limite de la masse tissée pour extraire l'ébauche 200 représentée sur la figure 7 telle qu'elle est issue du tissage 3D et avant toute conformation. La zone de déliaison 204 ménagée lors du tissage permet de former deux portions 210 et 211 tissées indépendamment et entre lesquelles s'étend le logement 206 à l'intérieur de l'ébauche 200. Le logement 206 est ouvert sur le bord radialement intérieur 220 et sur le bord arrière 230 de l'ébauche 200. Le bord arrière 230 de l'ébauche 200 correspond à la partie destinée à former le bord de fuite 110b de l'hélice 100 (figure 1).

Conformément à l'invention, le bord arrière 230 présente une ouverture partielle 231 qui s'étend à partir du bord radialement intérieur 220 sur une hauteur H₂₃₁ qui est inférieure à la hauteur H₂₀₄ sur laquelle s'étend la zone de déliaison 204 dans l'ébauche fibreuse 200 (figure 7), la hauteur H₂₀₄ de la zone de déliaison s'étendant entre le bord radialement intérieur 220 et le sommet 204b de la zone de déliaison 204 de l'ébauche 200, le sommet 204b correspondant également au sommet du logement 206. La hauteur H₂₀₄ correspondant également à la hauteur du logement 206 dans lequel la portion de conformation 61 du longeron 60 est disposée (figure 8). Cette ouverture partielle 231 au niveau du bord arrière 230 permet de ménager une portion fermée, dite portion de retenue 232, au niveau du bord arrière 230 de l'ébauche qui s'étend sur une hauteur H₂₃₂ comprise entre la fin de l'ouverture partielle 231 et le sommet 204b de la zone de déliaison 204 dans l'ébauche 200.

La portion de retenue 232 est obtenue en formant la zone de déliaison 204 sur une longueur de fils de chaîne variable au niveau du bord arrière 230. Plus précisément, comme illustrés sur la figure 4, les fils de chaîne 201 présents au niveau de la portion de retenue 232, c'est-à-dire ceux présents entre le sommet 204b de la zone de déliaison 204 et le bord arrière 230 de l'ébauche, sont liés par les fils de trame 202 à partir de la partie de l'ébauche 200 située au niveau de la jonction 233 entre l'ouverture partielle 231 et la portion de retenue 232. Entre la jonction 233 et le sommet 204b, on augmente progressivement le nombre de fils de chaîne tissés dans le sens de la largeur de l'ébauche afin d'obtenir une portion de retenue 232 de largeur croissante entre la jonction 233 et le sommet 204b.

La hauteur H₂₃₁ de l'ouverture partielle 231 est de préférence comprise entre 20% et 50% de la hauteur totale H₂₀₄ du logement 206, ce qui permet d'avoir une ouverture suffisante dans l'ébauche fibreuse pour introduire la portion de conformation du longeron tout en ménageant une portion de retenue apte à renforcer la tenue du longeron dans l'ébauche et à augmenter, par conséquent, la résistance mécanique de la pale d'hélice résultante.

Dans l'exemple décrit sur les figures 7 et 8, le contour 202a de la zone de déliaison 204 se détache progressivement du contour 206a du logement 206 à partir d'un point 209 et jusqu'à la jonction 233. On obtient ainsi une portion de retenue 232 qui présente une largeur décroissant progressivement entre le sommet 204b et la jonction 233. Cela permet de former la portion de retenue 232 tout en facilitant l'introduction de la portion de conformation 61 du longeron 60 dans le logement 206 de l'ébauche fibreuse 200. Une fois introduite dans le logement 204 de l'ébauche fibreuse 200, la portion de conformation 61 du longeron 60 n'est en contact avec la portion de retenue 232 que sur une zone s'étendant entre le sommet 204b et le point 209. Afin d'assurer une retenue suffisante de la portion de conformation dans l'ébauche fibreuse, la hauteur H₂₀₉ de la zone de contact entre la portion de conformation 61 et la portion de retenue 232 est de préférence comprise entre 20% et 50% de la hauteur totale H₂₀₄ du logement 204.

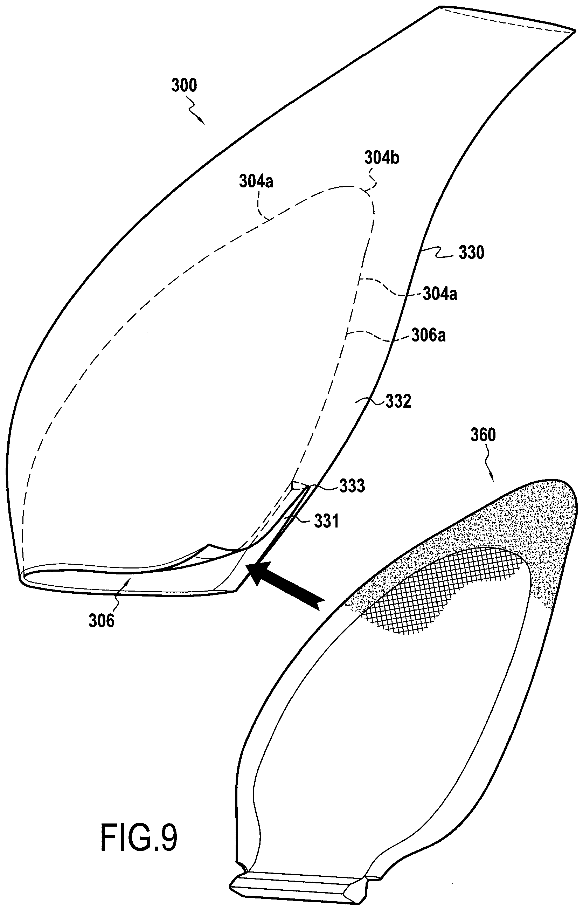

Dans le cas où l'on souhaite privilégier la tenue mécanique de l'hélice, en particulier la retenue de la portion de conformation dans la préforme de pale, par rapport à la facilité d'insertion de l'élément de conformation, on réalise une portion de retenue qui est adjacente au contour du logement au niveau du bord arrière de l'ébauche fibreuse. Une telle variante de réalisation est illustrée sur la figure 9 qui montre une ébauche fibreuse 300 comportant une portion de retenue 332 et une ouverture partielle 331 au niveau du bord arrière 330 de l'ébauche 300. La portion de retenue 332 est ici adjacente au contour 306a d'un logement 306 destiné à recevoir une portion de conformation 361 d'un longeron 360 identique au longeron 60 déjà décrit. Dans ce cas, la zone de déliaison 304 est formée lors du tissage de l'ébauche 300 de manière à ce que son contour 304a se confonde avec le contour 306a du logement 306 entre le sommet 304b de la zone de déliaison et la jonction 333 située entre l'ouverture partielle 331 et la portion de retenue 332. La hauteur de l'ouverture partielle 331 est de préférence comprise entre 20% et 50% de la hauteur totale du logement 304, ce qui permet d'avoir une ouverture suffisante dans l'ébauche fibreuse pour introduire la portion de conformation du longeron tout en ménageant une portion de retenue apte à renforcer la tenue du longeron dans l'ébauche et à augmenter, par conséquent, la résistance mécanique de la pale d'hélice résultante.

Sur la figure 7, la conformation de l'ébauche fibreuse 200 en une préforme de pale, est réalisée en introduisant dans le logement 206 la portion de conformation 61 du longeron 60.

Une fois la portion de conformation 61 introduite dans le logement 206 comme illustrée sur la figure 8, on procède à la densification de la préforme fibreuse de pale. Le bord arrière 100b et le bord inférieur 100c de l'ébauche sont de préférence refermés par couture avant la densification.

La densification de la préforme fibreuse consiste à combler la porosité de la préforme, dans tout ou partie du volume de celle-ci, par le matériau constitutif de la matrice.

La matrice du matériau composite constituant la structure à profil aérodynamique peut être obtenue de façon connue en soi suivant le procédé par voie liquide.

Le procédé par voie liquide consiste à imprégner la préforme par une composition liquide contenant un précurseur organique du matériau de la matrice. Le précurseur organique se présente habituellement sous forme d'un polymère, tel qu'une résine, éventuellement dilué dans un solvant. La préforme est placée dans un moule pouvant être fermé de manière étanche avec un logement ayant la forme de la pièce finale moulée et pouvant notamment présenter une forme vrillée correspondant à la forme définitive de la pale. Ensuite, on referme le moule et on injecte le précurseur liquide de matrice (par exemple une résine) dans tout le logement pour imprégner toute la partie fibreuse de la préforme.

La transformation du précurseur en matrice organique, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de l'hélice. La matrice organique peut être notamment obtenue à partir de résines époxydes, telle que la résine époxyde à hautes performances vendue sous la référence PR 520 par la société CYTEC, ou de précurseurs liquides de matrices carbone ou céramique.

Dans le cas de la formation d'une matrice carbone ou céramique, le traitement thermique consiste à pyrolyser le précurseur organique pour transformer la matrice organique en une matrice carbone ou céramique selon le précurseur utilisé et les conditions de pyrolyse. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir au degré de densification souhaité.

Selon un aspect de l'invention, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme extérieure de la pale. La portion de conformation 61 étant constituée de pièces rigides et ayant une forme correspondant à celle de la pale à réaliser, il joue avantageusement le rôle de contre-moule. Une résine thermodurcissable est injectée dans l'espace interne délimité entre la pièce en matériau rigide et le moule et qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La résine utilisée peut être, par exemple, une résine époxyde. Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

Après l'injection et la polymérisation, la pièce est démoulée. Au final, la pièce est détourée pour enlever l'excès de résine et les chanfreins sont usinés. Aucun autre usinage n'est nécessaire puisque, la pièce étant moulée, elle respecte les cotes exigées.

Le matériau rigide alvéolé utilisé pour réaliser la pièce 30 est de préférence un matériau à alvéoles fermées de manière à empêcher la pénétration de la résine dans celui-ci et conserver, ainsi, sa faible densité après densification de la préforme fibreuse.

Après densification de la préforme fibreuse, on obtient une pale d'hélice 100 telle que représentée sur la figure 1.

## Revendications

1. Pale d'hélice d'aéronef (100) comprenant une structure à profil aérodynamique (110) constituée d'au moins un renfort fibreux (200) obtenu par tissage tridimensionnel de fils et densifié par une matrice et un longeron (60) comprenant une portion renflée (62) s'étendant à l'extérieur du renfort fibreux et formant le pied (120) de la pale, et une portion de conformation (61) présente dans un logement (206) ménagé à l'intérieur du renfort fibreux (200),
le renfort fibreux (200) comportant une zone de déliaison (204) formant ledit logement (206) à l'intérieur du renfort fibreux (200), la zone de déliaison (204) débouchant au niveau de la partie radialement intérieure (220) et du bord arrière (230) du renfort fibreux (200) de manière à former une ouverture (231) pour l'introduction de la portion de conformation (61) du longeron (60) dans le logement (206) du renfort fibreux,
**caractérisée en ce que** l'ouverture (231) présente sur le bord arrière (230) du renfort fibreux (200) s'étend sur une hauteur (H₂₃₁) inférieure à la hauteur (H₂₀₄) du logement de manière à ménager sur ledit bord arrière (230) une portion de retenue (232) au moins partiellement en contact avec la portion de conformation (61) du longeron (60).

2. Pale selon la revendication 1, **caractérisée en ce que** l'ouverture (231) présente sur le bord arrière (230) du renfort fibreux (200) s'étend sur une hauteur (H₂₃₁) comprise entre 20% et 50% de la hauteur (H₂₀₄) du logement (206).

3. Pale selon la revendication 1 ou 2, **caractérisée en ce que** la portion de retenue (232) présente une largeur décroissante entre le sommet (204b) du logement (206) et la jonction (233) entre ladite portion de retenue (232) et l'ouverture (231) présente sur le bord arrière (230) du renfort fibreux (200).

4. Pale selon la revendication 3, **caractérisée en ce que** la zone de contact entre la portion de conformation (61) du longeron (60) et la portion de retenue (232) s'étend sur une hauteur (H₂₃₂) comprise entre 20% et 50% de la hauteur (H₂₀₄) du logement (206).

5. Pale selon l'une quelconque des revendications 1 à 4, **caractérisée en ce que** le longeron (60) comprend une pièce de structure (20) en matériau composite et une pièce en matériau rigide alvéolé (30) collée sur une partie du pourtour de la pièce de structure.

6. Moteur aéronautique comprenant une pluralité de pales selon l'une quelconque des revendications 1 à 5.

7. Aéronef comprenant au moins un moteur selon la revendication 6.

8. Procédé de fabrication d'une pale d'hélice d'aéronef (100) comprenant au moins:
- la réalisation d'une ébauche fibreuse (200) en une seule pièce par tissage tridimensionnel de fils (201, 202), ladite ébauche comportant une zone de déliaison (204) formant une logement (206) à l'intérieur de l'ébauche (200), ladite zone de déliaison (204) débouchant au niveau de la partie radialement intérieure (220) et du bord arrière (230) de l'ébauche fibreuse de manière à former une ouverture (231),
- la réalisation d'un longeron (60) comprenant une portion renflée (62) s'étendant à l'extérieur du renfort fibreux (200) et formant le pied (120) de la pale (100) et une portion de conformation (61) présente dans le logement (206) ménagé à l'intérieur du renfort fibreux (200),
- la mise en forme de l'ébauche fibreuse (200) par introduction de la portion de conformation (61) du longeron (60) dans le logement (206) de l'ébauche fibreuse (200) pour obtenir une préforme de structure à profil aérodynamique,
- la densification de la préforme par une matrice pour obtenir une structure à profil aérodynamique (110) ayant un renfort fibreux constitué par ladite préforme et densifié par la matrice,
**caractérisé en ce que** l'ouverture (231) présente sur le bord arrière (230) de l'ébauche fibreuse (200) s'étend sur une hauteur (H₂₃₁) inférieure à la hauteur (H₂₀₄) du logement (206) de manière à ménager sur ledit bord arrière une portion de retenue (232) au moins partiellement en contact avec la portion de conformation (61) du longeron (60).

9. Procédé selon la revendication 8, **caractérisé en ce que** l'ouverture (231) présente sur le bord arrière du renfort fibreux s'étend sur une hauteur (H₂₃₁) comprise entre 20% et 50% de la hauteur (H₂₀₄) du logement (206).

10. Procédé selon la revendication 8 ou 9, **caractérisé en ce que** la portion de retenue (232) présente une largeur décroissante entre le sommet (204b) du logement (206) et la jonction (233) entre ladite portion de retenue (232) et l'ouverture (231) présente sur le bord arrière (230) de l'ébauche fibreuse (200).

11. Procédé selon la revendication 10, **caractérisée en ce que** la zone de contact entre la portion de conformation (61) du longeron (60) et la portion de retenue (232) s'étend sur une hauteur (H₂₃₂) comprise entre 20% et 50% de la hauteur (H₂₀₄) du logement (206).

12. Procédé selon l'une quelconque des revendications 8 à 11, **caractérisé en ce que** la réalisation du longeron (60) comprend la fabrication d'une pièce de structure (20) en matériau composite et le collage d'une pièce en matériau rigide alvéolé (60) sur une partie du pourtour de ladite pièce de structure.

## Patentansprüche

1. Luftfahrzeug-Schraubenblatt (100), umfassend eine Struktur mit aerodynamischem Profil (110), die aus wenigstens einer Faserverstärkung (200) besteht, welche durch dreidimensionales Weben von Fäden erhalten wird und durch eine Matrix verdichtet ist, und einen Längsträger (60), der einen ausgebauchten Abschnitt (62), welcher sich außerhalb der Faserverstärkung erstreckt und den Fuß (120) des Blattes bildet, sowie einen Formungsabschnitt (61) umfasst, welcher in einer innerhalb der Faserverstärkung (200) ausgebildeten Aufnahme (206) vorhanden ist,
wobei die Faserverstärkung (200) einen Losbindungsbereich (204), welcher die Aufnahme (206) innerhalb der Faserverstärkung (200) bildet, umfasst, wobei der Losbindungsbereich (204) im Bereich des radial inneren Teils (220) und des hinteren Randes (230) der Faserverstärkung (200) ausmündet, um eine Öffnung (231) für das Einführen des Formungsabschnittes (61) des Längsträgers (60) in die Aufnahme (206) der Faserverstärkung zu bilden,
**dadurch gekennzeichnet, dass** die an dem hinteren Rand (230) der Faserverstärkung (200) vorhandene Öffnung (231) sich über eine Höhe (H₂₃₁), welche geringer als die Höhe (H₂₀₄) der Aufnahme ist, erstreckt, um an dem hinteren Rand (230) einen Halteabschnitt (232) auszubilden, der mit dem Formungsabschnitt (61) des Längsträgers (60) wenigstens teilweise in Kontakt ist.

2. Blatt nach Anspruch 1, **dadurch gekennzeichnet, dass** die an dem hinteren Rand (230) der Faserverstärkung (200) vorhandene Öffnung (231) sich über eine Höhe (H₂₃₁) erstreckt, die zwischen 20 % und 50 % der Höhe (H₂₀₄) der Aufnahme (206) beträgt.

3. Blatt nach Anspruch 1 oder 2, **dadurch gekennzeichnet, dass** der Halteabschnitt (232) eine Breite aufweist, die zwischen dem Scheitel (204b) der Aufnahme (206) und der Verbindung (233) zwischen dem Halteabschnitt (232) und der an dem hinteren Rand (230) der Faserverstärkung (200) vorhandenen Öffnung (231) abnimmt.

4. Blatt nach Anspruch 3, **dadurch gekennzeichnet, dass** sich der Kontaktbereich zwischen dem Formungsabschnitt (61) des Längsträgers (60) und dem Halteabschnitt (232) über eine Höhe (H₂₃₂) erstreckt, die zwischen 20 % et 50 % der Höhe (H₂₀₄) der Aufnahme (206) beträgt.

5. Blatt nach einem der Ansprüche 1 bis 4, **dadurch gekennzeichnet, dass** der Längsträger (60) ein Strukturteil (20) aus Verbundwerkstoff und ein Teil aus starrem wabenartigem Material (30), welches auf einen Teil des Umfangs des Strukturteils geklebt ist, umfasst.

6. Flugzeugtriebwerk, das eine Vielzahl von Blättern nach einem der Ansprüche 1 bis 5 umfasst.

7. Luftfahrzeug, das wenigstens ein Triebwerk nach Anspruch 6 umfasst.

8. Verfahren zur Herstellung eines Luftfahrzeug-Schraubenblattes (100), wenigstens umfassend:
- das Ausbilden eines einstückigen Faserrohlings (200) durch dreidimensionales Weben von Fäden (201, 202), wobei der Rohling einen Losbindungsbereich (204) umfasst, der eine Aufnahme (206) innerhalb des Rohlings (200) bildet, wobei der Losbindungsbereich (204) im Bereich des radial inneren Teils (220) und des hinteren Randes (230) des Faserrohlings ausmündet, um eine Öffnung (231) zu bilden,
- das Ausbilden eines Längsträgers (60), der einen ausgebauchten Abschnitt (62), welcher sich außerhalb der Faserverstärkung (200) erstreckt und den Fuß (120) des Blattes (100) bildet, sowie einen Formungsabschnitt (61) umfasst, welcher in der innerhalb der Faserverstärkung (200) ausgebildeten Aufnahme (206) vorhanden ist,
- das Informbringen des Faserrohlings (200) durch Einführen des Formungsabschnittes (61) des Längsträgers (60) in die Aufnahme (206) des Faserrohlings (200), um einen Strukturvorformling mit aerodynamischem Profil zu erhalten,
- das Verdichten des Vorformlings durch eine Matrix, um eine Struktur mit aerodynamischem Profil (110), welche eine durch den Vorformling gebildete und durch die Matrix verdichtete Faserverstärkung hat, zu erhalten,
**dadurch gekennzeichnet, dass** die an dem hinteren Rand (230) des Faserrohlings (200) vorhandene Öffnung (231) sich über eine Höhe (H₂₃₁), welche geringer als die Höhe (H₂₀₄) der Aufnahme (206) ist, erstreckt, um an dem hinteren Rand einen Halteabschnitt (232) auszubilden, der mit dem Formungsabschnitt (61) des Längsträgers (60) wenigstens teilweise in Kontakt ist.

9. Verfahren nach Anspruch 8, **dadurch gekennzeichnet, dass** die an dem hinteren Rand der Faserverstärkung vorhandene Öffnung (231) sich über eine Höhe (H₂₃₁) erstreckt, die zwischen 20 % und 50 % der Höhe (H₂₀₄) der Aufnahme (206) beträgt.

10. Verfahren nach Anspruch 8 oder 9, **dadurch gekennzeichnet, dass** der Halteabschnitt (232) eine Breite aufweist, die zwischen dem Scheitel (204b) der Aufnahme (206) und der Verbindung (233) zwischen dem Halteabschnitt (232) und der an dem hinteren Rand (230) des Faserrohlings (200) vorhandenen Öffnung (231) abnimmt.

11. Verfahren nach Anspruch 10, **dadurch gekennzeichnet, dass** sich der Kontaktbereich zwischen dem Formungsabschnitt (61) des Längsträgers (60) und dem Halteabschnitt (232) über eine Höhe (H₂₃₂) erstreckt, die zwischen 20 % et 50 % der Höhe (H₂₀₄) der Aufnahme (206) beträgt.

12. Verfahren nach einem der Ansprüche 8 bis 11, **dadurch gekennzeichnet, dass** das Ausbilden des Längsträgers (60) die Herstellung eines Strukturteils (20) aus Verbundwerkstoff und das Kleben eines Teils aus starrem wabenartigem Material (60) auf einen Teil des Umfangs des Strukturteils umfasst.

## Claims

1. An aircraft propeller blade (100) comprising a streamlined structure (110) constituted by at least one piece of fiber reinforcement (200) obtained by three-dimensionally weaving yarns and densified by a matrix, together with a spar (60) including an enlarged portion (62) extending outside the fiber reinforcement and forming the root (120) of the blade, and a shaping portion (61) present in a housing (206) arranged inside the fiber reinforcement (200),
the fiber reinforcement (200) including a non-interlinked zone (204) forming said housing (206) inside the fiber reinforcement (200), the non-interlinked zone (204) opening out into the bottom portion (220) and into the rear edge (230) of the fiber reinforcement (200) so as to form an opening (231) for inserting the shaping portion (61) of the spar (60) into the housing (206) of the fiber reinforcement,
the blade being **characterized in that** the opening (231) present in the rear edge (230) of the fiber reinforcement (200) extends over a height (H₂₃₁) that is less than the height (H₂₀₄) of the housing so as to leave in said rear edge (230) a retaining portion (232) that comes at least in part into contact with the shaping portion (61) of the spar (60).

2. A blade according to claim 1, **characterized in that** the opening (231) present in the rear edge (230) of the fiber reinforcement (200) extends over a height (H₂₃₁) lying in the range 20% to 50% of the height (H₂₀₄) of the housing (206).

3. A blade according to claim 1 or claim 2, **characterized in that** the retaining portion (232) presents a width that decreases between the tip (204b) of the housing (206) and the junction (233) between said retaining portion (232) and the opening (231) present in the rear edge (230) of the fiber reinforcement (200).

4. A blade according to claim 3, **characterized in that** the zone of contact between the shaping portion (61) of the spar (60) and the retaining portion (232) extends over a height (H₂₃₂) lying in the range 20% to 50% of the height (H₂₀₄) of the housing (206).

5. A blade according to any one of claims 1 to 4, **characterized in that** the spar (60) comprises a structural part (20) of composite material and a part made of rigid cellular material (30) adhesively bonded to a portion of the outline of the structural part.

6. An aeroengine having a plurality of blades according to any one of claims 1 to 5.

7. An aircraft including at least one aeroengine according to claim 6.

8. A method of fabricating an aircraft propeller blade (100), the method comprising at least:
- making a fiber blank (200) as a single piece by three-dimensionally weaving yarns (201, 202), said blank including a non-interlinked zone (204) forming a housing (206) inside the blank (200), said non-interlinked zone (204) opening out into the bottom portion (220) and into the rear edge (230) of the fiber blank so as to form an opening (231);
- making a spar (60) including an enlarged portion (62) extending outside the fiber reinforcement (200) and forming the root (120) of the blade (100), and a shaping portion (61) present in the housing (206) formed inside the fiber reinforcement (200);
- shaping the fiber blank (200) by inserting the shaping portion (61) of the spar (60) into the housing (206) in the fiber blank (200) in order to obtain a preform for the streamlined structure; and
- densifying the preform with a matrix in order to obtain a streamlined structure (110) having fiber reinforcement constituted by said preform and densified by the matrix;
the method being **characterized in that** the opening (231) present in the rear edge (230) of the fiber blank (200) extends over a height (H₂₃₁) that is less than the height (H₂₀₄) of the housing (206) so as to leave in said rear edge a retaining portion (232) that comes at least in part into contact with the shaping portion (61) of the spar (60).

9. A method according to claim 8, **characterized in that** the opening (231) present in the rear edge of the fiber reinforcement extends over a height (H₂₃₁) lying in the range 20% to 50% of the height (H₂₀₄) of the housing (206).

10. A blade according to claim 8 or claim 9, **characterized in that** the retaining portion (232) presents a width that decreases between the tip (204b) of the housing (206) and the junction (233) between said retaining portion (232) and the opening (231) present in the rear edge (230) of the fiber blank (200).

11. A blade according to claim 10, **characterized in that** the zone of contact between the shaping portion (61) of the spar (60) and the retaining portion (232) extends over a height (H₂₃₂) lying in the range 20% to 50% of the height (H₂₀₄) of the housing (206).

12. A method according to any one of claims 8 to 11, **characterized in that** the spar (60) is made by fabricating a structural part (20) of composite material and adhesively bonding a part (60) made of rigid cellular material to a portion of the outline of said structural part.
